Europäisches Patentamt

European Patent Office

Office européen des brevets

(19)

(11) Veröffentlichungsnummer : **0 443 064 B1**

(12) **EUROPÄISCHE PATENTSCHRIFT**

(45) Veröffentlichungstag der Patentschrift :
**23.11.94 Patentblatt 94/47**

(51) Int. Cl.$^5$ : **H04N 5/45**

(21) Anmeldenummer : **90103395.1**

(22) Anmeldetag : **19.02.90**

(54) **Einrichtung zum Einblenden eines ersten Bildes in ein zweites Bild auf einem Bildschirm.**

(43) Veröffentlichungstag der Anmeldung :
**28.08.91 Patentblatt 91/35**

(45) Bekanntmachung des Hinweises auf die
Patenterteilung :
**23.11.94 Patentblatt 94/47**

(84) Benannte Vertragsstaaten :
**AT BE CH DE ES FR GB IT LI NL SE**

(56) Entgegenhaltungen :
**EP-A- 0 097 500**

(56) Entgegenhaltungen :
**PATENT ABSTRACTS OF JAPAN, Band 10, Nr.
125 (E-402)[2182], 10. Mai 1986; & JP-A-60 257
682 (MATSUSHITA DENKI SANGYO K.K.) 19-
12-1985
PATENT ABSTRACTS OF JAPAN, Band 6, Nr.
222 (E-140)[1100], 6. November 1982; JP-A-57
127 371 (MATSUSHITA DENKI SANGYO K.K.)
07-08-1982
FUNKSCHAU, Nr. 21, 6. Oktober 1989, Seiten
53-55; K. KUSCH: "Bild im Bild, die nächste
Generation"**

(73) Patentinhaber : **SIEMENS
AKTIENGESELLSCHAFT
Wittelsbacherplatz 2
D-80333 München (DE)**

(72) Erfinder : **Mende, Manfed
Johann-Strauss-Strasse 4
D-8025 Unterhaching (DE)**

**Beschreibung**

Die Erfindung betrifft eine Einrichtung zum Einblenden eines ersten Bildes in ein zweites Bild auf einem Bildschirm

- mit einer ersten digitalen Bildverarbeitungsstufe zum Erzeugen von ersten analogen Bildsignalen für das erste Bild, welche Mittel zum Generieren des ersten Bildes und eine Bildspeichereinrichtung zur Zwischenspeicherung dieses ersten Bildes sowie eine ausgangsseitig vorgesehene Digital-Analog-Umsetzstufe aufweist,
- mit einer zweiten Bildverarbeitungsstufe zum Erzeugen von zweiten analogen Bildsignalen für das zweite Bild,
- mit einer Umschalteinrichtung, die zwischen den ersten und zweiten Bildsignalen umschaltbar ist und an deren Ausgangsklemmen die ersten und/oder zweiten Bildsignale abgreifbar sind,
- und mit einer Steuereinrichtung zur Ansteuerung der ersten Bildverarbeitungsstufe, der zweiten Bildverarbeitungsstufe und der Umschalteinrichtung.

Eine solche Einrichtung ist beispielsweise aus Siemens Components Heft 1, 1990 bekannt. Als wesentlichen Bestandteil weist diese Anordnung einen Bild-im-Bild-Prozessor (SDA 9088) von Siemens auf, der die Einblendung eines verkleinerten Bildes in ein größeres Hauptbild ermöglicht. Beide Bildquellen können dabei völlig unabhängig bezüglich der Fernsehnorm und Synchronisation gewählt sein. Der Bild-im-Bild-Prozessor übernimmt die Bildverkleinerung, die Zwischenspeicherung dieses verkleinerten Bildes in einem integrierten Bildspeicher sowie die Ausgabe der Bilddaten dieses verkleinerten Bildes über eine Digital-Analog-Umsetzstufe, so daß das Bildsignal für das verkleinerte Bild am Ausgang des Bild-im-Bild-Prozessors in analoger Form vorliegt.

Die zweite Bildverarbeitungsstufe, die aus einer zweiten Videosignalquelle Bildsignale für das zweite Bild bereitstellt, kann grundsätzlich analog oder digital aufgebaut sein. Der Aufbau und die Wirkungsweise einer solchen zweiten Bildsignalverarbeitungsstufe in digitaler Form ist beispielsweise in Siemens Components Heft 6, 1988 auf den Seiten 240 bis 245 beschrieben. Am Ausgang dieser zweiten Bildverarbeitungsstufe sind bei diesem bekannten System analoge Bildsignale abgreifbar. Eine Umschalteinrichtung am Ausgang der ersten und zweiten Bildverarbeitungsstufe sorgt für ein zeitrichtiges Umschalten zwischen den Bildsignalen für das verkleinerte erste Bild und das zweite Hauptbild, so daß am Bildschirm des Fernsehgerätes ein in ein Großbild dargestelltes Kleinbild sichtbar wird.

Es hat sich gezeigt, daß diese Anordnung hinsichtlich Unterschieden in den Amplituden der ersten Bildsignale und zweiten Bildsignale problematisch ist. So können bei der Bild-im-BildDarstellung unerwünschte Kontrastunterschiede zwischen dem Kleinbild und dem Großbild auftreten, die für den Betrachter unangenehm und störend wirken. Außerdem war es für den Betrachter des Bildschirms bei der Bild-im-Bild-Einblendung nach dem bisher beschriebenen Konzept nicht möglich, den Kontrast des Kleinbildes nach seinen individuellen Wünschen, beispielsweise über seine Fernbedienung, einzustellen.

Eine Möglichkeit, den Kontrast eines Kleinbildes einstellbar zu machen, ist bereits in Funkschau, Heft 21, 1989, auf den Seiten 53 bis 55 beschrieben worden. Dort wird die Kontrasteinstellung im digitalen Farbdecoder und damit am Eingang der digitalen Signalverarbeitung der Bildsignale vorgenommen, was schaltungstechnisch nur aufwendig zu realisieren ist.

Eine weitere Möglichkeit zur Kontrasteinstellung würde darin bestehen, in die Umschalteinrichtung eine Amplitudenregelung sowohl für das erste als auch für das zweite Bildsignal vorzusehen. Dies würde aber zwangsweise zu einer hinsichtlich seines schaltungstechnischen Aufbaus aufwendigen Umschalteinrichtung, die damit teuer ist, führen.

In der Veröffentlichung Patent Abstracts of Japan, Band 10, Nr. 125 (E-402) [2182], ist ein Fernsehgerät mit Bild-im-Bild-Einblendung gezeigt, bei dem die Amplitude des einzublendenden Bildes erst nach dessen Digital-Analog-Wandlung, aber vor der Bildeinblendung in das Hauptbild durchgeführt wird. Zur Steuerung wird ein analoggewandeltes Steuersignal verwendet, dem ein entsprechendes Steuersignal für das Hauptbild überlagert wird.

In der Veröffentlichung Patent Abstracts of Japan, Band 6, Nr. 222 (E-140) [1100], ist ein Analog-Digital-Wandler für digitale TV-Eingangssignale gezeigt, bei dem die Amplitude des Ausgangssignals einstellbar ist. Hierzu ist eine Vielzahl von ausgangsseitig parallel geschalteten Strompfaden vorgesehen, die jeweils zwei Transistoren und einen zwischen diesen angeordneten Widerstand aufweisen. Einer der Transistoren wird jeweils von einem Bit des digitalen TV-Signals gesteuert, die anderen Transistoren werden gemeinsam von einer von einem analog einstellbaren Widerstand gelieferten Spannung gesteuert.

Der Erfindung liegt daher die Aufgabe zugrunde, die eingangs beschriebene Einrichtung so weiterzubilden, daß in einer im Vergleich zu den bisherigen Möglichkeiten einfacheren Weise realisierbar ist und eine digitale Steuerung der Kontrasteinstellung des zweiten Bildes ermöglicht wird.

Diese Aufgabe wird erfindungsgemäß dadurch gelöst, daß die zu der ersten Bildverarbeitungsstufe vorgesehenen Digital-Analog-Umsetzstufe mindestens ein variables Referenzsignal zur Ausgangsamplitudeneinstellung der ersten analogen Bildsignale zufnhrbar ist, daß das Referenzsignal eine Referenzspannung ist, die am Verbindungspunkt eines zwischen Versorgungsklemmen geschalteten Spannungsteilers abgreifbar ist, und daß diese Referenzspannung von der Steuereinrichtung nach Maßgabe digitaler Steuersignale einstellbar ist, indem mindestens ein Widerstand mittels Steuerung durch eines der digitalen Steuersignale einem Zweig des Spannungsteilers parallel schaltbar ist.

Weiterbildungen der Erfindung sind Gegenstand der Unteransprüche.

Durch die erfindungsgemäß einfache Lösung ist es möglich, den Kontrast des eingeblendeten Bildes entweder selbsttätig an das Großbild anzupassen oder aber den Betrachter z. B. über seine Fernbedienung die Möglichkeit zu geben, den Kontrast individuell einstellen zu können. Durch die digitale Steuerung der Referenzsignale der Digital-Analog-Umsetzstufe ist ein Höchstmaß an Flexibilität zur Kontrasteinstellung gegeben.

Bei der vorliegenden Erfindung können - wie eingangs bereits erwähnt - Bildquellen unterschiedlichster Art für das erste und zweite Bild verwendet werden, beispielsweise Fernsehprogramme, Videokameras oder Videorekorder. Es ist aber auch möglich, Untertitel z. B. für Gehörgeschädigte in ein Hauptbild einzublenden, wie es derzeit im Zusammenhang mit den von den Fernsehanstalten ausgestrahlten Videotext- bzw. Teletextsignalen möglich ist.

Es wird also mit der erfindungsgemäßen Einrichtung in einfacher Weise erreicht, daß der Kontrast des ersten Bildes den Kontrast des zweiten Bildes angepaßt oder aber individuell eingestellt werden kann. Besonders vorteilhaft ist dies bei der Bild-in-Bild-Darstellung, aber auch nützlich bei zeitlich aufeinanderfolgenden Bildsequenzen. So kann der Fernsehzuschauer beispielsweise nach der Betrachtung eines Fernsehprogramms auf eine Videotexttafel umschalten, bei der der Kontrast individuell einstellbar ist, unabhängig davon wie der Kontrast des Fernsehprogramms gewählt ist. Beim "Zurückspringen" zum Fernsehprogramm wird am Fernsehgerät automatisch wieder der Kontrast für das Fernsehprogramm eingestellt.

Um solche Videotextsignale natürlich empfangen zu können, muß die Einrichtung zum Empfang von Informationen in Form codierter Zeichen geeignet sein, die über einen Zeichengenerator zu Bildsignalen umformbar sind. Integrierte Schaltungen zum Empfang solcher Videotextsignale sind beispielsweise unter der Bezeichnung SDA 5243 von Siemens bekannt.

Die Erfindung wird im folgenden anhand der Bild-im-Bild-Einblendung im Zusammenhang mit zwei Figuren näher erläutert. Es zeigen:

FIG 1     ein Prinzipschaltbild zur Bild-im-Bild-Einblendung mit einer ersten Bildverarbeitungsstufe mit einer ausgangsseitig vorgesehenen Digital-Analog-Umsetzstufe und einer zweiten Bildverarbeitungsstufe sowie einer nachgeschalteten Umschalteinrichtung und

FIG 2     eine Schaltungsanordnung zum Einstellen des Referenzsignales, das der Digital-Analog-Umsetzstufe nach FIG 1 zugeführt wird.

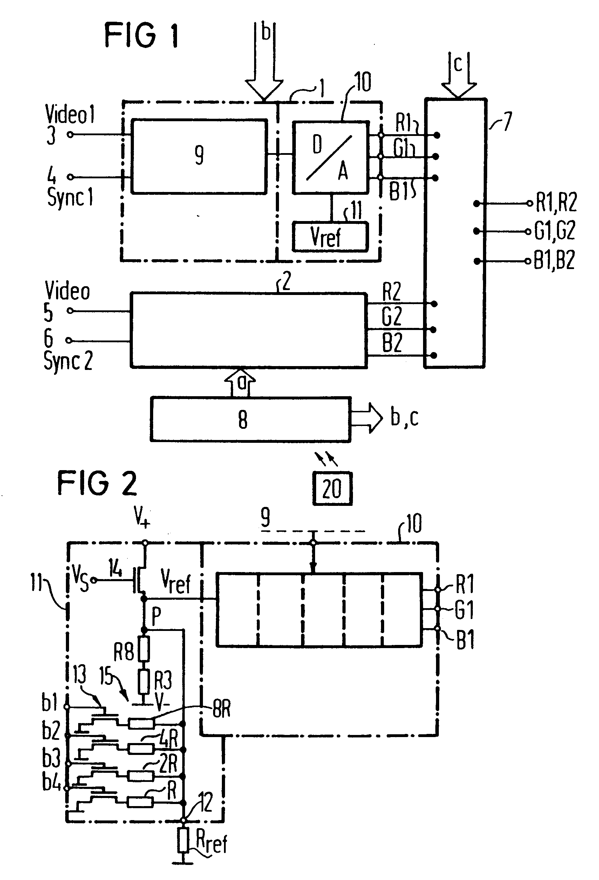

In FIG 1 ist das Prinzipschaltbild zur Bild-im-Bild-Einblendung mit einer ersten Bildverarbeitungsstufe 1 und einer zweiten Bildverarbeitungsstufe 2 gezeigt. Die erste Bildverarbeitungsstufe 1 weist Eingangsklemmen 3, 4 zum Anlegen erster Videosignale Video 1 und dazugehörender Synchronsignale Sync 1 auf. Die zweite Bildverarbeitungsstufe 2 ist mit Eingangsklemmen 5, 6 für zweite Videosignale Video 2 sowie zweite Synchronsignale Sync 2 versehen. An Ausgangsklemmen der ersten Bildverarbeitungsstufe 1 sind erste analoge Bildsignale R1, G1, B1 und an Ausgangsklemmen der zweiten Bildverarbeitungsstufe 2, zweite analoge Bildsignale R2, G2, B2 abgreifbar.

Die ersten und zweiten Bildsignale R1, G1, B1; R2, G2, B2 gelangen an eine Umschalteinrichtung 7, die zeitrichtig zwischen den ersten Bildsignalen R1, G1, B1 und zweiten Bildsignalen R2, G2, B2 umschaltet. Eine Steuereinrichtung 8 ist über mehradrige Verbindungsleitungen a, b, c mit der ersten Bildverarbeitungsstufe 1, zweiten Bildverarbeitungsstufe 2 und Umschalteinrichtung 7 verbunden und sorgt über geeignete Steuersignale zur richtigen Ansteuerung der einzelnen Komponenten.

Die erste Bildverarbeitungsstufe 1 weist einen Bild-im-Bild-Prozessor, z. B. den integrierten Schaltkreis SDA 9088 von Siemens auf, der über eine Signalverarbeitungsstufe 9, die der Bildverkleinerung, der Zwischenspeicherung der digitalen Bilddaten in einem integrierten Bildspeicher sowie der Ausgabe der digitalen Bilddaten des verkleinerten Bildes an Digital-Analog-Umsetzstufe 10 dient. Dabei ist erfindungsgemäß der Digital-Analog-Umsetzstufe 10 ein variables Referenzsignal aus einer Referenzsignalstufe 11 zuführbar, wobei dieses Referenzsignal von der Steuereinrichtung 8 nach Maßgabe digitaler Steuersignale b einstellbar ist. Die Digital-Analog-Umsetzstufe 10 ist vorzugsweise ein D/A-Wandler mit schaltbaren Stromquellen, wie dieser als solcher aus Tietze-Schenk, Halbleiter-Schaltungstechnik, 5. Auflage, 1980, unter Punkt 24.2.2 beschrieben ist.

In FIG 2 ist die Referenzsignalstufe 11 detailliert dargestellt. Als Referenzsignal dient eine Referenzspannung $V_{ref}$, die der Digital-Analog-Umsetzstufe 10 zugeführt wird. Diese Referenzspannung $V_{ref}$, wird am Verbindungspunkt P eines Spannungsteilers abgegriffen, der zwischen eine Versorgungsspannungquelle V+ und Bezugsspannung V−, hier Masse, geschaltet ist. Der Spannungsteiler besteht aus einem an die Versorgungsspannungquelle V+ geschalteten MOS-Transistor 14, dessen Steueranschluß an einer Spannung $V_S$ liegt, mit in Reihe geschalteten Widerständen R3 und R8. Der Verbindungspunkt P liegt zusätzlich an einer Ausgangsklemme 12 der ersten Bildverarbeitungsstufe 1. An dieser Ausgangsklemme 12 ist extern ein auf Bezugspotential V− geschalteter Widerstand $R_{ref}$ anzuschließen, wodurch die Referenzspannung $V_{ref}$ zunächst grob festgelegt wird. Mit dem Verbindungspunkt P sind mindestens zwei weitere Widerstände 15, hier insgesamt vier Widerstände, verbunden, die mit ihren jeweiligen anderen Anschlüssen über jeweils einen Halbleiterschalter 13 auf Bezugspotential V− liegen, wobei die Steueranschlüsse der Halbleiterschalter mit Klemmen verbunden sind, an die Steuersignale b1, b2, b3, b4 der Steuereinrichtung 8 anlegbar sind. Über die in FIG 1 dargestellte Steuereinrichtung 8 können diese Widerstände an- und abgeschaltet werden. Dadurch wird der Referenzstrom des in FIG 2 dargestellten Stromspiegels verändert, der die Referenzspannung $V_{ref}$ der Digital-Analog-Umsetzstufe erzeugt. Die Widerstandswerte $R_n$ der Widerstände 15 werden entsprechend

$$R_n = R \cdot 2^{(n-1)}$$

gewählt. Bei dem in FIG 2 dargestellten Beispiel haben die Widerstände 15 die Werte R, 2R, 4R und 8R. Über die Steuersignale b1, b2, b3 und b4 wird damit beispielsweise eine Kontrastvariation von ± 20 % in 16 Stufen erreicht. Durch das Ändern der Referenzspannung der Digital-Analog-Umsetzstufe 10 ergibt sich eine gleichmäßige Änderung des Ausgangsstromes, ohne daß sich die Eigenschaften der Digital-Analog-Umsetzstufe 10 wesentlich verändern.

Mit der vorliegenden Erfindung kann in besonders einfacher Weise der Kontrast des einzublendenden Bildes über eine Tastatur am Fernsehgerät oder die dazugehörende Fernbedienung, wie diese in FIG 1 mit dem Bezugszeichen 20 versehen ist, eingestellt werden. Darüber hinaus kann die Kontrasteinstellung des einzublendenden Bildes in Abhängigkeit des Hauptbildes selbsttätig eingestellt werden. Dazu muß lediglich die Amplitude der zweiten Bildsignale R2, G2, B2 in FIG 1 erfaßt und die Amplitude der ersten Bildsignale R1, G1 und B1 dazu angeglichen werden.

## Patentansprüche

1. Einrichtung zum Einblenden eines ersten Bildes in ein zweites Bild auf einem Bildschirm
   - mit einer ersten digitalen Bildverarbeitungsstufe (1) zum Erzeugen von ersten analogen Bildsignalen (R1, G1, B1) für das erste Bild, welche Mittel zum Generieren des ersten Bildes und eine Bildspeichereinrichtung zur Zwischenspeicherung dieses ersten Bildes sowie eine ausgangsseitig vorgesehene Digital-Analog-Umsetzstufe (10) aufweist,
   - mit einer zweiten Bildverarbeitungsstufe (2) zum Erzeugen von zweiten analogen Bildsignalen (R2, G2, B2) für das zweite Bild,
   - mit einer Umschalteinrichtung (7), die zwischen den ersten und zweiten Bildsignalen (R1, G1, B1; R2, G2, B2) umschaltbar ist und an deren Ausgangsklemmen die ersten und/oder zweiten Bildsignale (R1, G1, B1; R2, G2, B2) abgreifbar sind,
   - und mit einer Steuereinrichtung (8) zur Ansteuerung der ersten Bildverarbeitungsstufe (1), der zweiten Bildverarbeitungsstufe (2) und der Umschalteinrichtung (7),
   **dadurch gekennzeichnet,**
   daß der in der ersten Bildverarbeitungsstufe (1) vorgesehenen Digital-Analog-Umsetzstufe (7) mindestens ein variables Referenzsignal zur Ausgangsamplitudeneinstellung der ersten analogen Bildsignale (R1, G1, B1) zuführbar ist, daß das Referenzsignal eine Referenzspannung (Vref) ist, die am Verbindungspunkt (P) eines zwischen Versorgungsklemmen (V+, V-) geschalteten Spannungsteilers (14, R8, R3) abgreifbar ist, und daß diese Referenzspannung ($V_{ref}$) von der Steuereinrichtung (8) nach Maßgabe digitaler Steuersignale (b; b1, b2, b3, b4) einstellbar ist, indem mindestens ein Widerstand (15) mittels Steuerung durch eines der digitalen Steuersignale (b, b1, b2, b3, b4) einem Zweig des Spannungsteilers parallel schaltbar ist.

2. Einrichtung nach Anspruch 1,
   **dadurch gekennzeichnet,**
   daß die Digital-Analog-Umsetzstufe (7) eine Vielzahl von schaltbaren Stromquellen aufweist.

3. Einrichtung nach Anspruch 1 oder 2,
   **dadurch gekennzeichnet,**

daß dem Zweig (R8, R3) des Spannungsteilers (14, R8, R3) n Widerstände (15) parallel schaltbar sind, deren Widerstandswerte $R_n$ gleich $R \bullet 2^{n-1}$ gewählt sind und n eine ganze Zahl größer gleich 2 ist.

4. Einrichtung nach einem der Ansprüche 1 bis 3,
   **dadurch gekennzeichnet,**
   daß das Referenzsignal so gewählt ist, daß die ersten analogen Bildsignale (R1, G1, B1) und zweiten Bildsignale (R2, G2, B2) an den Eingängen der Umschalteinrichtung (7) gleiche Amplituden aufweisen.

5. Einrichtung nach einem der Ansprüche 1 bis 3,
   **dadurch gekennzeichnet,**
   daß eine Fernbedienung (20) vorgesehen ist, über die die Steuersignale (b; b1, b2, b3, b4) der Steuereinrichtung (8) zur Amplitudeneinstellung der ersten analogen Bildsignale (R1, G1, B1) festlegbar sind.

6. Einrichtung nach einem der Ansprüche 1 bis 5,
   **dadurch gekennzeichnet,**
   daß die Mittel zum Generieren der ersten analogen Bildsignale (R1, B1, G1) zur Bildverkleinerung geeignet sind.

7. Einrichtung nach einem der Ansprüche 1 bis 5,
   **dadurch gekennzeichnet,**
   daß die Mittel zum Generieren der ersten analogen Bildsignale (R1, G1, B1) zum Empfang von Informationen in Form codierter Zeichen geeignet sind, die über einen Zeichengenerator in die ersten analogen Bildsignale (R1, G1, B1) umformbar sind.

8. Verwendung der Einrichtung nach einem der Ansprüche 1 bis 7 in einem Fernsehgerät.

## Claims

1. Device for inserting a first image into a second image on a screen,
   - having a first digital image processing stage (1) for generating first analog picture signals (R1, G1, B1) for the first image, which stage contains means for generating the first image and an image storing device for temporarily storing said first image, as well as a digital/analog conversion stage (10) provided on the output side,
   - having a second image processing stage (2) for generating second analog picture signals (R2, G2, B2) for the second image,
   - having a switchover device (7) which can be switched over between the first and second picture signals (R1, G1, B1; R2, G2, B2) and at the output terminals of which the first and/or second picture signals (R1, G1, B1; R2, G2, B2) can be picked up,
   - and having a control device (8) for driving the first image processing stage (1), the second image processing stage (2) and the switchover device (7),
   characterized in that at least one variable reference signal for adjusting the output amplitude of the first analog picture signals (R1, G1, B1) can be supplied to the digital/analog conversion stage (7) provided in the first image processing stage (1), in that the reference signal is a reference voltage (Vref) which can be picked up at the connecting point (P) of a voltage divider (14, R8, R3) connected between supply terminals (V+, V-), and in that said reference voltage ($V_{ref}$) can be adjusted by the control device (8) in accordance with digital control signals (b; b1, b2, b3, b4) in that at least one resistor (15) can be connected in parallel with one branch of the voltage divider by being controlled by one of the digital control signals (b, b1, b2, b3, b4).

2. Device according to Claim 1, characterized in that the digital/analog conversion stage (7) contains a plurality of switchable current sources.

3. Device according to Claim 1 or 2, characterized in that n resistors (15) can be connected in parallel with the branch (R8, R3) of the voltage divider (14, R8, R3), the resistances $R_n$ of which resistors are selected to be equal to $R \cdot 2^{n-1}$, where n is an integer greater than or equal to 2.

4. Device according to one of Claims 1 to 3, characterized in that the reference signal is selected in such a way that the first analog picture signals (R1, G1, B1) and second picture signals (R2, G2, B2) have the same amplitudes at the inputs of the switchover device (7).

5. Device according to one of Claims 1 to 3, characterized in that a remote control (20) is provided by means of which it is possible to set the control signals (b; b1, b2, b3, b4) of the control device (8) for adjusting the amplitude of the first analog picture signals (R1, G1, B1).

6. Device according to one of Claims 1 to 5, characterized in that the means for generating the first analog picture signals (R1, B1, G1) are suitable for reducing the image.

7. Device according to one of Claims 1 to 5, characterized in that the means for generating the first analog picture signals (R1, G1, B1) are suitable for receiving information in the form of encoded characters which can be transformed by means of a character generator into the first analog picture signals (R1, G1, B1).

8. Use of the device according to one of Claims 1 to 7 in a television set.

**Revendications**

1. Dispositif pour incruster une première image dans une seconde image sur un écran, comportant
   - un premier étage numérique de traitement d'images (1) pour produire des premiers signaux d'image analogiques (R1,G1, B1) pour la première image et qui comporte des moyens pour produire la première image et un dispositif de mémoire d'images pour mémoriser temporairement cette première image ainsi qu'un étage de conversion numérique/analogique (10) prévu côté sortie,
   - un second étage de traitement d'images (2) pour produire deux signaux d'image analogique (R2,G2,B2) pour la seconde image,
   - un dispositif de commutation (7), qui peut être commuté entre les premier et second signaux d'image (R1,G1,B1; R2,G2,B2) et sur les bornes de sortie duquel peuvent être prélevés les premiers et/ou seconds signaux d'image (R1, G1,B1; R2,G2,B2), et
   - un dispositif de commande (8) pour commander le premier étage de traitement d'images (1), le second étage de traitement d'images (2) et le dispositif de commutation (7),

   caractérisé par le fait
   qu'au moins un signal de référence variable pour le réglage de l'amplitude de sortie des premiers signaux d'image analogiques (R1,G1,B1) peut être envoyé à l'étage de conversion numérique/analogique (7) prévu dans le premier étage de traitement d'images (1), que le signal de référence est une tension de référence (Vref), qui peut être prélevée au niveau du point de liaison (P) d'un diviseur de tension (14,R8,R3) branché entre des bornes d'alimentation (V+, V-), et que cette tension de référence ($V_{ref}$) est réglable par le dispositif de commande (8) en fonction de signaux de commande numériques (b;b1,b2,b3,b4), par le fait qu'au moins une résistance (C1) peut être branchée en parallèle avec une branche du diviseur de tension, au moyen de la commande réalisée à l'aide de l'un des signaux de commande numériques (b;b1,b2,b3,b4).

2. Dispositif suivant la revendication 1, caractérisé par le fait que l'étage de conversion numérique/ analogique (7) possède une multiplicité de sources de courant commutables.

3. Dispositif suivant la revendication 1 ou 2, caractérisé par le fait qu'en parallèle avec la branche (R8, R3) du diviseur de tension (14,R8,R3) sont branchées n résistances (15), dont les valeurs résistives $R_n$ sont choisies égales à $R.2^{n-1}$, n étant un nombre entier supérieur ou égal à 2.

4. Dispositif suivant l'une des revendications 1 à 3, caractérisé par le fait que le signal de référence est choisi de telle sorte que les premiers signaux d'image analogiques (R1,G1,B1) et les seconds signaux d'image (R2,G2, B2) présents aux entrées du dispositif de commutation (7) possèdent des amplitudes identiques.

5. Dispositif suivant l'une des revendications 1 à 3, caractérisé par le fait qu'il est prévu une télécommande (20), au moyen de laquelle les signaux de commande (b;b1,b2, b3,b4) du dispositif de commande (8) peuvent être fixés pour le réglage de l'amplitude des premiers signaux d'image analogiques (R1,G1,B1).

6. Dispositif suivant l'une des revendications 1 à 5, caractérisé par le fait que des moyens servant à produire les premiers signaux d'image analogiques (R1,B1,G1) conviennent pour réaliser une réduction de l'image.

7. Dispositif suivant l'une des revendications 1 à 5, caractérisé par le fait que les moyens servant à produire les premiers signaux d'image analogiques (R1,G1,B1) conviennent pour la réception d'informations sous la forme de signaux codés, qui peuvent être transformés, par l'intermédiaire d'un générateur de caractères, en les premiers signaux d'image analogiques (R1,G1,B1).

8. Utilisation du dispositif suivant l'une des revendications 1 à 7 dans un appareil de télévision.

## FIG 1

## FIG 2